# EUROPEAN PATENT SPECIFICATION

(11) **EP 3 748 296 B1**
(45) Date of publication and mention of the grant of the patent: **01.04.2026**
(21) Application number: 19178964.3
(22) Date of filing: 07.06.2019
(51) Int. Cl.: G01C 21/00, G01C 21/20, G01S 13/88, G01S 13/89, G01S 17/89

(54) **METHOD AND SCANNING SYSTEM FOR COMPUTING A USE CASE SPECIFIC SCAN ROUTE**
VERFAHREN UND ABTASTSYSTEM ZUR BERECHNUNG EINER VERWENDUNGSFALLSPEZIFISCHEN ABTASTROUTE
PROCÉDÉ ET SYSTÈME DE BALAYAGE POUR CALCULER UN ITINÉRAIRE DE BALAYAGE SPÉCIFIQUE À UN CAS D'UTILISATION

(43) Date of publication of application: 09.12.2020
(73) Proprietor: Siemens Schweiz AG, 8047 Zürich (CH)
(72) Inventor: Frey, Christian, 6314 Unterägeri (CH); Zechlin, Oliver, 6300 Zug (CH)
(74) Representative: Siemens Patent Attorneys

(56) References cited:
- EP-A1- 2 511 656
- DE-A1- 102014 012 811
- US-A1- 2007 219 720
- US-A1- 2008 027 591

## Description

The invention relates to a method and a scanning system for computing a use case specific scan route of a mobile scanning device in a scanning environment.

Orientation is one of the most important capabilities that a human being has to learn, and it remains essential - especially when we enter new environments. Most people have no problems finding their way around their regular environment. However, this is not the case when people enter a place for the first time, in particular, a building, e.g., an airport, a museum, or a huge shopping mall or when people are looking for something specific for the first time. This is the moment where navigation systems become more and more important. For the reason that GPS does not work inside of buildings, in particular in closed rooms, mobile navigation devices or electronic device with outdoor navigation functionality cannot be used and a different kind of navigation system, in particular an indoor navigation system, is required. Indoor navigation systems require a highly precise and digital representation of the building, a so-called digital twin of the building, to detect and/or to present the current location of a person in the building and to route or lead the person to a desired destination. However, indoor navigation is only one possible application that requires highly precise information; further applications based on the digital twin are conceivable.

Recently constructed buildings are planned digitally by a building information modeling (BIM) that results in digital 2D and/or 3D models of the building. These models can be used for indoor navigation systems. For already existing buildings only analog ground plans are available, which cannot be used by indoor navigation.

For the digital capture of a building structure, such as rooms, objects inside the building, and/or the surface, mainly mobile scanning devices are used, which may generate a point cloud on the basis of reflections from e.g. walls, doors, windows, machines, furniture etc. From the scanning result an orientation plan and possibly even a digital floor plan can be generated. The scanning devices use capturing systems to capture the required information from the scanning environment. The scanning devices are designed as static or mobile devices, wherein the mobile devices are able to move through the building, either by being portable, movable or by moving automatically.

The operation of these scanning devices requires a profound knowledge by the operator. The operator of the scanning device has to know how the scanner captures the information of the scanning environment and how to design an optimal scan route for the scanning device accordingly. A lack of knowledge for operating the scanning device affects directly the scan result and scan quality, which may result in a poor digital floor plan that may not be usable. In addition, the operator of the scanning device has to know the accuracy and precision with which certain objects and/or areas have to be scanned to fulfil the requirements for later use of the scan data.

In state-of-the-art scanning procedures, the operator is free of any instructions or guidance for the scanning procedure. The operator does not know and receives no advice for the optimal route for scanning the scanning environment or the required scanning areas in the optimal time and in the optimal way to reach the starting point again as far as possible. An operator always runs the risk of scanning too much or the risk of missing important scanning areas or the risk of scanning them inadequately.

Moreover, the on-site operation (scanning procedure) of the scanning device should be as efficient (time and data optimized) and effective (depending on the use-case quality optimized) as possible in order to keep costs and disruption of operation or even interruption of operation at the scanned site low. A pre-planning of scan routes is often not possible, as no (current) floor plans are available, which may endanger the scan objectives and result in insufficient quality, which may not be sufficient for the later application of the scan information.

The German patent application DE102014012811A1 discloses a method for determining a floor plan of an apartment by means of a self-propelled floor cleaning device comprising a drive unit, a control unit and a navigation unit, a control unit and a navigation unit.

The American patent application US20080027591A1 discloses a system for controlling more than one remote vehicle. The system comprises an operator control unit allowing an operator to receive information from the remote vehicles and send commands to the remote vehicles via a touch-screen interface, the remote vehicles being capable of performing autonomous behaviors using information received from at least one sensor on each remote vehicle.

The European patent application EP2511656A1 discloses a surveying system for determining 3D coordinates, in particular of a plurality of 3D coordinates, of measuring points of an object surface, in particular of an industrial product.

A common approach is that a route planning (the route along which the mobile scanning device should by moved) is made in advance manually and based mostly on the operator's experience. This in turn is only possible if a building plan (e.g., floor plan) is available. In addition, coordination with the location operating personnel is also necessary as part of the preliminary planning. This preliminary planning should include actions, which have to be carried out by the building management systems for support of the scan process instead of obstructing the scan process. This includes, for instance, the adaption of an access control system, which has to provide access to the floors and rooms, or the lighting, which can be turned on automatically in advance before entering the scan area and turned off after leaving the area, or alarm-protected areas can be automatically switched to inactive before entering the scan area and after leaving the area back to active.

Accordingly, it is an object of the present invention to provide a method and a scanning system for computing a use case specific scan route for routing a mobile scanning device on the basis of the use case specific route to achieve an improved scan result of the scanning environment, at least a partially optimized scan result of the scanned environment.

This object is achieved according to a first aspect of the present invention by a computer-implemented method for computing a use case specific scan route of a mobile scanning device in a scanning environment comprising the features of claim 1.

The invention provides according to the first aspect a method for computing a use case specific scan route of a mobile scanning device in a scanning environment, comprising the method steps of:
determining a position of the mobile scanning device in the scanning environment;
capturing scanning environment information by a capturing system of the mobile scanning device in a surrounding area of the mobile scanning device within the scanning environment starting from the determined position of the mobile scanning device in the scanning environment;
generating a digital environmental representation of the scanning environment comprising the determined position of the mobile scanning device and the captured scanning environment information, wherein the digital environmental representation is updated with further captured scanning environment information while the mobile scanning device is moving or is moved in the scanning environment;
computing the use case specific scan route of the mobile scanning device on the basis of the created digital environmental representation of the scanning environment using the scanning environment information for creating a digital twin of a building;
wherein the computed use case specific scan route (SSR) is used by a building automation system to activate/deactivate systems in the scanning environment to make areas more optimally available for the scanning process.

In the context of the present invention, "scan route" can be understood to mean, for instance, a path that the mobile scanning device has to follow or should ideally follow for achieving the required scan result. The scan route may comprise information for changing the moving direction, such as, forward, backward, left, and right or rotation. Moreover, the scan route may comprise information how fast the mobile scanning device should be moved at corresponding positions and/or how long it should stay at corresponding positions. Further specifying information are conceivable.

In connection with the present invention, "mobile scanning device" can be understood to mean, for instance, to be a mobile, movable or portable scanning device. A mobile scanning device is capable of moving itself (autonomously) or is moving controlled via remote control by an operator. A movable or portable device can be carried or easily moved by a person. According to the present invention, the mobile scanning device may be moved, in particular, may be pushed by an operator.

In connection with the present invention, "scanning environment" can be understood to mean, for instance, the environment from which a digital twin is required or which has to be scanned. The scanning environment may be any area or location within a building. The scanning environment can also be understood to be a part or area of a scanning environment to be scanned.

In connection with the present invention, "surrounding area" can be understood to mean, for instance, the working range of the mobile scanning device, in particular, the working range of the capturing system of the mobile scanning device. The working range may describe the range in which information can be detected by the capturing system. The range depends on the capturing system being used.

In connection with the present invention, "use case" can be understood to mean, for instance, a specification of what has to be scanned in the scanning environment and in which level of detail and accuracy. The required level of detail and accuracy depends on the intended further usage of the scanning environmental information. For instance, for generating an indoor navigation presentation of the building only used by persons moving in the building, a lower level of detail is required or sufficient.

For instance, for generating a digital twin of the building, a precise and higher resolution scan is required, where all walls, corners, and objects, etc. have to be scanned. Moreover, a use case can also comprise a pre-defined scanning time or a pre-defined scanning area. Moreover, a use case may comprise the specification of the area to be scanned in a certain time. This use case can be further defined by using a scan detail parameter comprising information, such as, the number of single offices or the surface of free areas in the scanning environment.

Advantageously, the method and the mobile scanning device provides a dynamical and ad hoc computation of a specific scan route for a mobile scanning device, in particular of a use case specific scan route, without any a priori knowledge of the environment to be scanned. Moreover, the computation of the scan route does not require any planning and preparation on-site. The method and the mobile scanning device of the present invention only requires the environment awareness that is provided by the capturing system of the mobile scanning device.

Further, with the method and the mobile scanning device of the present invention it is possible to provide information of the scanning environment to be scanned in a digital twin with higher quality, where no objects of surfaces are inadequately scanned or even not scanned at all.

Moreover, the scan procedure can be performed even by unexperienced operators without loss in quality and without planning and/or instructions for the operator.

In addition, the present invention allows to predict the time expenditure for the scan process, which can be provided to the operator or for scheduling the scan process.

In a possible embodiment, the position is determined automatically on the basis of a stored ground plan of the scanning environment. In connection with the present invention, "ground plan" can be understood to mean, for instance, a digital twin of the building, an already existing digital plan, or a scan of an analog (paper) ground plan. The ground plan may be provided via a portable data carrier (data storage device), e.g., a USB-Stick, SD-Card, micro SD-Card, external HD-Drive, CD, DVD, BR-Disc. Further, the mobile scanning device may comprise a communication interface for connecting via a communication network, e.g. WIFI, LAN, WAN to a server, server cluster, or a cloud providing the ground plan.

In this way, an existing ground plan can be used for preprocessing of the scanning environment. A starting position can be defined for starting the scan process. Moreover, any changes in the provided "historical" ground plan which are then detected during the recording can be used for ad-hoc recalculation and optimization of the new scan route.

In a further possible embodiment, the position is determined automatically by using existing at least one reference information sources of the scanning environment. A reference information source may comprise any existing sensor or transmitter infrastructure or optical features located in the scanning environment. The reference information source may be used to localize the position of the mobile scanning device in the scanning environment or in the digital environmental representation of the scanning environment.

In a further possible embodiment, the reference information source comprises information regarding a WIFI network or a WIFI source. An existing WIFI network may be used for a WIFI positioning system (WPS). The WPS is a geolocation system that uses the characteristic of nearby WIFI hotspots and other wireless access points to discover where the mobile scanning device is located. A common and widespread localization technique that is used for positioning with wireless access points is based on measuring the intensity of the received signals. Typical parameters useful to geolocate the wireless access points include its SSID and MAC address.

In a further possible embodiment, the reference information source comprises information regarding a Bluetooth network or a Bluetooth source. A Bluetooth connection is a wireless technology standard for exchanging data between the communication gateway and the portable device over a short distance using short-wavelength UHF radio waves from 2.400 to 2.485 GHz. Further a Bluetooth Low Energy connection can be used as reference information. Bluetooth Low Energy, is a wireless personal area network technology which can be used to connect mobile devices in an environment of about 10 meters. Bluetooth Low Energy has a significantly lower power consumption and lower costs with a similar communication range. For localization, installed Bluetooth beacons in the scanning environment can be localized by its unique Bluetooth ID. Bluetooth beacons are small radio transmitters that transmit signals within a radius of 10-30 meters (indoor areas) and determine a position up to 1 meter accurately. The mobile scanning device may receive Bluetooth signals from beacons installed in the scanning environment and may use the signal strength measurement to determine its position.

In a further possible embodiment, the reference information source comprises information regarding a marker. In a further possible embodiment, the reference information comprises information regarding QR-codes. The reference information source may be used to determine the current localization of the mobile scanning device. The position of the reference information source has to be known and the current localization of the mobile scanning device may be computed using the known information. The scanned reference information source may provide information on the georeferenced position within the building. Georeferencing means that the internal coordinate system of a map or aerial photo image can be related to a ground system of geographic coordinates.

In a further possible embodiment, the use case comprises parameters, for instance, a required or requested level of detail. The level of detail comprises information, which objects in the scanning environment have to be scanned and in which resolution. According to the level of detail, the scan information may be used for different purposes, such as for navigation applications or model building (digital twin). With the level of detail, a balance between time expenditure required for scanning the scanning environment and precise scanning environment information is achieved.

In a further possible embodiment, the use case comprises parameters including quality requirements. The quality requirements describe the required and/or desired value (target value) of the scan procedures according to the scan purpose. In this way, a value is given by which the progress or degree of achievement of scan objectives may be measured and/or determined by comparing with the actual value. If the required and/or desired value is not achieved, a warning or note is provided to the operator that may lead to adaptions or corrections in the scan procedure and/or scan route.

In a further possible embodiment, the use case comprises parameters including time requirements. According to the scanning environment, a fixed time schedule or time slot may have to be considered for performing the scan procedure. According to the time requirements, the scan procedure may be optimized in such a way that within a scan as much area as possible of the scanning environment is scanned by the mobile scanning device.

The dynamic calculation of the scan route, and thus of the scan, can be carried out in different ways using use cases or associated algorithm parameters. Thus, a scan which is mainly used for the creation of a navigation application is preferably different from a scan with the goal of creating a digital twin model. In the case of a navigation-optimized scan, the (probable) walking routes of users of such an application are relevant, whereas in the case of a scan with the purpose of building modeling, the accuracy has to be also very high in areas where a user does not walk, which may extend the scanning time and increase data for storage.

In a further possible embodiment, the capturing system comprises at least a lidar system or ladar system. A lidar (light detection and ranging) or ladar (laser detection and ranging) system is a surveying method that measures distance to target by illuminating the target with pulsed laser light and measuring the reflected pulses with a sensor. Differences in laser return times and wavelength can then be used to generate the digital 3D representations (point cloud) of the space.

In a further possible embodiment, the capturing system comprises at least a camera system. The camera may be used for distance measurements to distinguish objects in the environment and to provide data for generating the digital 3D representations of objects.

In a further possible embodiment, the capturing system comprises at least a radar system. Radar may be used for distance measurements, to distinguish objects in the environment and/or to provide data for generating the digital 3D representations of objects and the space.

In a further possible embodiment, the capturing system comprises at least an acoustic system. Acoustic systems, e.g. ultrasonic sensors may be used as a distance measurement, to distinguish objects in the environment and to provide data for generating the digital 3D representations of objects.

In a further possible embodiment, the capturing system comprises at least an infrared system. An infrared system may be used for distance measurements, to distinguish objects in the environment and/or to provide data for generating the digital 3D representations of objects.

In a further possible embodiment, the capturing system comprises at least a temperature measurement system. A temperature system may be used for distance measurements, to distinguish objects in the environment and/or to provide data for generating the digital 3D representations of objects.

The above presented systems for distance measurement may be used separately or in combination to scan the scanning environment and/or to distinguish objects in the scanning environment.

In a further possible embodiment, the method step of generating the digital environmental representation comprises a prediction of the scan time required for the use case specific scan route. Depending on the quality of the detection sensor (high and fine resolution is preferred), the predicted scanning time for this area can also be calculated when a digital environmental representation is built up.

In a further possible embodiment, the predicted scan time is provided to an operator of the mobile scanning device and/or to a further connected system. The predicted scanning time can be passed on to the operator and/or to further technical systems, e.g., access control system, light control system, security system, video surveillance system, and/or motion detector. A calculation of the expected scan time for a certain scanning environment can be performed by considering running systems or persons working in this environment. For instance, a danger for an operator pushing the mobile scanning device in a room with less or reduced oxygen concentration (fire protection reason) can be calculated and displayed. Moreover, the influence of time on the detection quality, e.g. laser drift, may be quantified and considered.

With the prediction of the scan time, the operator, or an automated control system, may decide whether they should continue scanning an area (or, in the case of the control system, instruct a mobile scanning device to do so), or rather interrupt scanning the area, saving the progress made so far and then continuing at a later time from the saved progress. With the prediction of the scan time the operator (or an automated control system) may also determine whether or not scanning the area should be started in the first place or whether the starting of the scanning should be scheduled (preferably automatically) to a later time point, in particular a time point which offers enough time for the mobile scanning device to finish the scanning.

In a further possible embodiment, the method step of generating the digital environmental representation comprises a deviation calculation. In this way, the present invention evaluates the scan result on-the-fly. If the scan result does not match certain requirements, or even partial areas of the scanning environment are considered to be not inadequately scanned or even not scanned at all, the mobile scanning device may suggest a repetition of the scan procedure for at least the partial area with values not matching the requirements.

In a further possible embodiment, the method step of generating the digital environmental representation comprises an on-the-fly analysis of the captured scanning environment information. For instance, if a door is detected in the point cloud of the scan or in the photo scan, the operator can be informed about following rooms, which may have to be scanned as well.

The computed use case specific scan route is used to activate/deactivate regions and/or systems in the scanning environment. The computed use case specific route is passed on to a higher-level system. Depending on the scanning environment, this information is used to make areas more optimally available for the scanning process by a building automation system (e.g., the lights can be switched on and blinds can be raised in a preferred radius around the scan route; while these are switched off or closed again when the scan procedure is finished).

An access control system can also be used to make an action area in the building accessible and to close it again when leaving the area. The same applies to alarm-protected areas, which have to be deactivated and then reactivated. By computing and transmitting the scan route in advance (preferably automatically), it is also possible to inform the security personnel or, in an industrial environment, the local production control or autonomous or human-controlled vehicles (forklift trucks, transport robots). These may optimize the scan process and make it more efficient.

The invention further provides according to a second aspect a scanning system, preferably a mobile scanning system, comprising means for carrying out the steps of the method for computing a use case specific scan route.

In a possible embodiment, the invention thus provides a (preferably mobile) scanning system for computing a use case specific scan route in a scanning environment, comprising a mobile scanning device and a local or remote computer unit, wherein the mobile scanning device is in communication with a local or remote computer unit, the computer unit is configured to determine a position of the mobile scanning device in the scanning environment;
wherein the mobile scanning device comprises a capturing system configured to capture scanning environment information in a surrounding area of the mobile scanning device within the scanning environment starting from the determined position of the mobile scanning device in the scanning environment;
the computer unit is further configured to generate a digital environmental representation of the scanning environment comprising the determined position of the mobile scanning device and the captured scanning environment information, wherein
the digital environmental representation is updated with further captured scanning environment information while the mobile scanning device is moving/moved in the scanning environment; and
wherein the computer unit is further configured to compute the use case specific scan route of the mobile scanning device on the basis of the generated digital environmental representation of the scanning environment. The scanning environment information is used for creating a digital twin of a building. The use case specific scan route is used by a building automation system to activate/deactivate systems in the scanning environment to make areas more optimally available for the scanning process by a building automation system.

In a possible embodiment, the mobile scanning device comprises an autonomous mobile scanning device or a mobile scanning device steered and/or controlled by an operator. The autonomous mobile scanning device may a be mobile robot using the simultaneous localization and mapping method (SLAM). The SLAM method includes the computational problem of constructing or updating a map (digital environmental representation) of an unknown environment while simultaneously keeping track of the mobile scanning device's location within it. From the position of the mobile scanning device as a starting point in the map, an environmental representation can be built up and continued on an ongoing basis. The mobile scanning device thus gains an ever-improving knowledge of the environment, the rooms and the building over the scan time. This knowledge can be used to provide control commands for the steering system of the autonomous mobile scanning device steering the autonomous mobile scanning device along a use case specific scan route.

In a further embodiment, the knowledge can be used to provide an operator a use case specific scan route on a display unit or an acoustic signal for steering or controlling the mobile scanning device. The mobile scanning device can be controlled via remote control or handled, e.g. pushed, by the operator. In a further possible embodiment, the computer unit is integrated in the mobile scanning device or hosted in a cloud platform. The invention thus also provides a mobile scanning device with an integrated computer unit so that the entire mobile scanning system may be mobile, i.e. a mobile scanning system.

A mobile device equipped with the computer unit may perform the scan procedure autonomously and independently from any other system.

A mobile device equipped with a communication connection to a cloud platform that host the computer unit may provide greater performance and memory capacities for performing the scan procedure. The mobile scanning device may then be constructed in smaller size. Greater performance and memory capacities provide the possibility for artificial intelligence implementation.

In a further possible embodiment, the mobile scanning device comprises a display unit. The display unit may be used to display the computed use case specific scan route to the operator. Further, the display unit can be used to display an existing map of the scanning environment, where the computed use case specific scan route is overlaid. The computed use case specific scan route may be displayed as a line that has to be followed or as direction signs indicating a change in position or direction.

In a further possible embodiment, the mobile scanning device comprises an acoustic output unit. The acoustic output unit, e.g. a speaker, headphone, etc. may be used to provide acoustic commands for controlling and/or steering the mobile scanning device through the scanning environment according to the computed use case specific scan route.

The invention further provides according to a third aspect a computer program product for computing a use case specific scan route comprising the features of claim 12.

The third aspect of the present invention relates to a computer program product comprising a computer program, the computer program being loadable into a memory unit of a computing unit, including program code sections to make the computing unit execute the method for computing a use case specific scan route according to the first aspect of the invention, when the computer program is executed in said computing unit.

The computer program may be processed in a distributed manner, such as that certain steps are performed on a first computing entity (e.g. on the mobile scanning device) and that other steps are performed on a second computing entity (e.g. on a central server or in the cloud).

The computer program may be offered, placed on market, used, imported and/or stored as (and thus may be part of) the computer program product. Thus, the computer program may be provided on a non-transitory storage medium (computer readable medium, like a computer disc or a memory stick etc.). Alternatively, the computer program may be provided via download by means of a respective network connection to a server, which stores the computer program by providing a link to the server with the computer program stored thereon. A "computer-readable medium" or "storage medium" can be any means that can contain, store communicate, propagate, or transport the program for use by or in connection with the mobile scanning device. The computer readable medium can be, for instance but not limited to, an electronic, magnetic, optical, electromagnetic, infrared, or semiconductor system, apparatus, device, or propagation medium. More specific examples (a non-exhaustive list) of the computer-readable medium can include the following: an electrical connection having one or more wires, a portable computer diskette, a random access memory (RAM), a read-only memory (ROM), an erasable programmable read-only memory (EPROM or Flash memory), an optical fiber, a memory card (e.g. SD card), flash card or memory cartridge, a portable hard disk drive (HDD), a portable solid state disk drive (SSD) and a portable compact disc read-only memory (CDROM) .

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures. In general, the figures are not drawn to scale. It shall be understood that a preferred embodiment of the present invention can also be any combination of the dependent claims or above embodiments with the respective independent claim.

These and other aspects of the invention will be apparent from and elucidated with reference to the embodiments described hereinafter.

### Brief description of the drawings

Fig. 1 is a schematic drawing of a mobile scanning system moving in the scanning environment while performing the method according to an embodiment of the present invention;
Fig. 2 is a flow chart depicting steps of a method for computing a use case specific scan route according to an embodiment of the present invention;
Fig. 3 is a block diagram representing elements of a mobile scanning system according to an embodiment of the present invention; and
Fig. 4 is a schematic drawing showing the digital environmental representation of a scanning environment generated by a mobile scanning system according to an embodiment of the present invention.

### Detailed description of the preferred embodiments

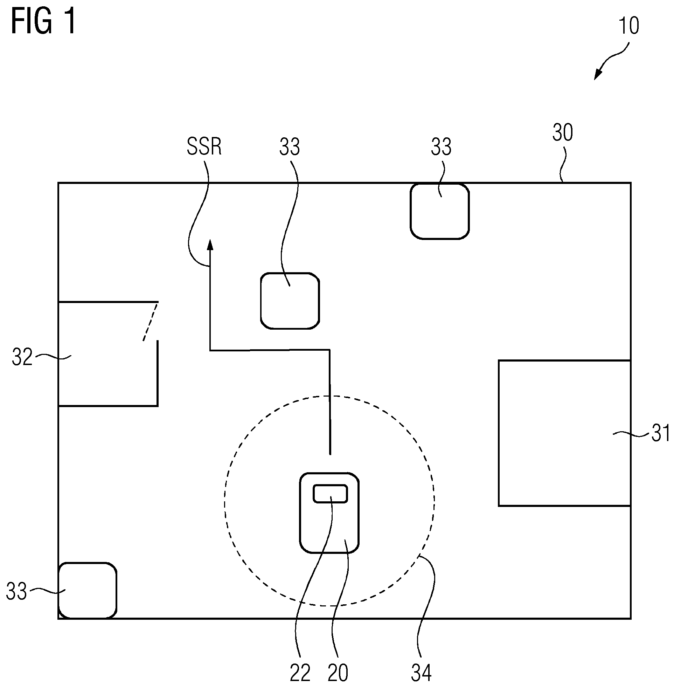

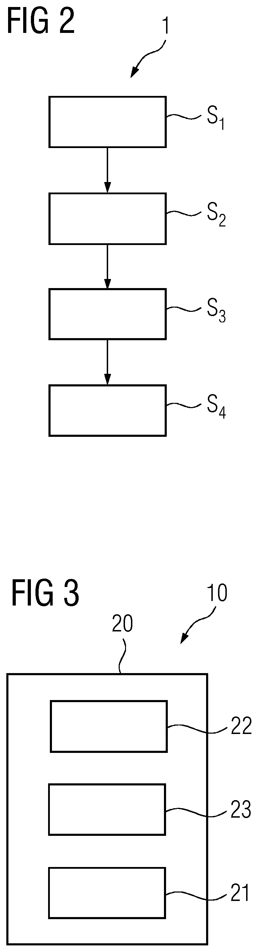

Fig. 1 is a schematic drawing of a mobile scanning system 10 moving in a scanning environment 30 performing the method 1 according to an embodiment of the present invention. The mobile scanning system 10 comprises at least one mobile scanning device 20 with an integrated computer unit 23 (see Fig. 3). The mobile scanning device 20 comprises a capturing system 22 as also shown in Fig. 1. The capturing system 22 may comprise a lidar system, a camera system, a radar system, an acoustic system, an infrared system, and/or a temperature measurement system. The above listed capturing systems 22 may be used separately or in combination for scanning the scanning environment 30.

The capturing system 22 may comprise in a preferred embodiment a minimum and maximum capturing range for scanning the scanning environment 30 and/or capturing scanning environment information 31, 32, 33. The capturing range is defined by the surrounding area 34 of the mobile scanning device 20 and depends on the capturing system 22 as used. The scanning environment 30, i.e. the area to be scanned, may be a building, in particular a building with a plurality of floors, rooms and corridors.

The scanning environment 30 may contain at least one object which provides (or which objects provide) a plurality of different scanning environment information 31, 32, 33. The scanning environment information 33 may originate from objects in the building, such as plants, furniture, obstacles, etc. The scanning environment information 31 may for instance originate from a closed room. The scanning environment information 32 may, for instance, represent a room with an open door. The listed examples are not limiting the objects which can be detected by the mobile scanning device 20 in the scanning environment 30. The mobile scanning device 20 computes automatically a use case specific scan route SSR.

The use case specific scan route SSR is determined and computed based on defined use cases according to a specified purpose. A scan that is performed for creating a navigation application differs in its resolution and level of detail from a scan for creating a digital twin of the building. Both scans differ in the required scanning time and in the processing of the scan data as well as in the level of detail. For instance, a digital twin of the building that is intended for further usage such as restructuring measures or a redesign may need more detail or a higher resolution in the pictures or point cloud than a navigation optimized scan. Therefore, a parameter, e.g., the level of detail, may be reduced and the required scan time is lower. Further, if only a fixed time for a scan period is available, the parameters for quality and/or level of detail may be adapted to execute the scan on the specific scan route SSR.

In a further embodiment, the present invention comprises a deviation calculation that calculates and verifies the scan result and provides a note and/or signal to the operator or mobile scanning device 20, which indicates that the current scan result does not fulfil the required scan expectations. The note and/or signal is provided as a result of the round scan by the capturing system 22. The mobile scanning device 20 may be moved back (e.g., automatically) to the position with the inadequate scan result.

In a further embodiment, a signal and/or note is provided to the operator indicating a re-start of the scan procedure by starting from a certain position. A parameter describing a key process indicator (KPI) may be provided that specifies which scan value has to be achieved for the scan result to be acceptable and to move further on computing the specific scan route SSR.

In a further embodiment, a use case may comprise the highest scan coverage rate in a certain and fixed time. The mobile scan system 10 may compute the scan route for scanning as much area in the scanning environment 30 in a given period of time as possible.

According to the invention, the use case specific scan route is used to activate/deactivate regions and/or systems in the scanning environment 30. For instance, a light management system can be connected to the mobile scanning system 10 and the light or light elements can be switched on/off according the computed specific scan route SSR, where the mobile scanning device 20 is currently moving. Moreover, security systems and/or locking systems can be activated/deactivated to grant access to secured areas for capturing the requested scanning environment to ensure an optimized scanning procedure.

Advantageously, the present invention provides an efficient scan and detection of data for generating a digital twin of the scanning environment 30, in particular within a building. The method saves time for scanning the scanning environment 30, which reduces required resources. The quality of the scan result is increased. The operator controlling or steering the mobile scanning device 20 according to the present invention does not require any experience or training for operating the mobile scanning device 20. Moreover, the required scanning time for achieving an optimized scan result is decreased.

Fig. 2 is a flow chart depicting steps of a method for computing a use case specific scan route SSR according to an embodiment of the present invention. The method comprises in the illustrated exemplary embodiment several main steps.

In a first step S1, a position of the mobile scanning device 20 in the scanning environment 30 is determined.

In a further step S2, scanning environment information 31, 32, 33 is captured by a capturing system 22 of the mobile scanning device 20 in a surrounding area 34 of the mobile scanning device 20 within the scanning environment 30 starting from the determined position of the mobile scanning device 20 in the scanning environment 30.

In a further step S3, a digital environmental representation 40 of the scanning environment 30 comprising the determined position of the mobile scanning device 1 and the captured scanning environment information data 31, 32, 33 is generated, wherein the digital environmental representation 40 is automatically updated with further captured scanning environment information 31, 32, 33 while the mobile scanning device 20 is moving or is moved in the scanning environment 30.

In a further step S4, the use case specific scan route SSR of the mobile scanning device 20 is computed on the basis of the created digital environmental representation 40 of the scanning environment 30. The collected scanning information data of the updated environmental representation 40 is processed to calculate the SSR taking into account use case specific parameters.

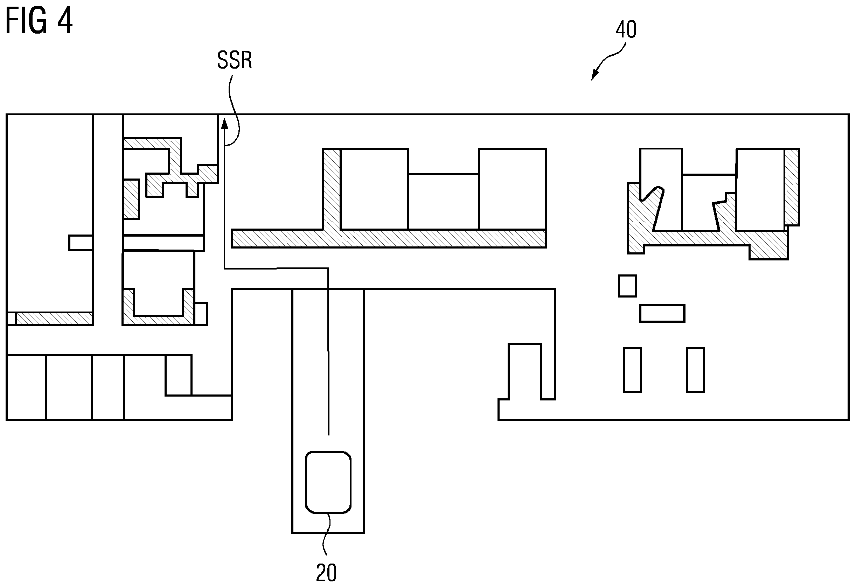

The method steps depicted by Fig. 2 can be executed by the mobile scanning system 10 comprising the computer unit 21 as shown in Fig. 3. The method steps S1 to S4 are executed iteratively. By using the SLAM procedure or similar procedures providing a digital environmental representation 40 (see Fig. 4) of the scanning environment 30, the mobile scanning device 20 achieves a growing (detail growing) knowledge base over the scanning environment 30, e.g. the building, and the rooms and floors of the building as well as the physical objects within the building. This knowledge may be used to calculate a use case specific scan route SSR output to an operator of the mobile scanning device 20 or processed to provide control commands for an autonomous mobile scanning device 20. The specific scan route SSR may be specified for certain use cases. A use case can describe or indicate the purpose for performing the respective scan and achieves different scan results. The use cases can be specified according to time, quality, and level of detail parameters.

By using the knowledge of the scanning environment (SLAM or methods based thereon) an optimized algorithm used in particular for a specific use case can calculate the use case specific scan route SSR. The algorithm takes a look "into the past" (the knowledge of the environment, the map that is being built up, the (scanned) environment that has already been captured), "into the present" (the current position) and "into the future" (the proposed scan route).

Fig. 3 shows a block diagram representing elements of a mobile scanning system 10 according to an embodiment of the present invention. The mobile scanning system 10 comprises a mobile scanning device 20 with an integrated computer unit 21. The mobile scanning device 20 comprises a capturing system 22. The capturing system 22 may comprise a lidar system, a camera system, a radar system, an acoustic system, an infrared system, and/or a temperature measurement system. The capturing system 22 may comprise a minimum and maximum capturing range for scanning the scanning environment 30 and/or capturing scanning environment information 31, 32, 33 as presented in Fig. 1. The capturing range is defined by the surrounding area 34 of the mobile scanning device 20 as presented in Fig. 1.

The mobile scanning device 20 comprises a computer unit 21. A computer unit 21 refers to any electronic device comprising a processor, such as a general-purpose central processing unit (CPU), a specific purpose processor or a microcontroller. The processor is adapted to execute a special computing task, namely for computing the use case specific scan route SSR. A computer unit 21 may receive data (an input), of performing a sequence of predetermined operations thereupon, and of producing thereby a result in the form of information or signals (an output). Depending on context, the computer unit 21 refers either to a processor or can refer more generally to a processor in association with an assemblage of interrelated elements contained within a single case or housing.

In an alternative embodiment of the present invention, the computer unit 21 of the mobile scanning system 10 is hosted on a server or server cluster, or in a cloud platform.

The mobile scanning device 20 further comprises a display unit 23. The display unit 23 may be used to display the computed use case specific scan route SSR. The display unit 23 may comprise an LCD, a monitor, or a handheld connected to the mobile scanning device 20 via a communication connection, such as, Ethernet, WIFI, Bluetooth, VGA, HDMI, PCI, or DVI, etc. The display unit 23 may be installed on the mobile scanning device 20 or may be stored or accommodate separately.

In a further embodiment, a machine learning algorithm is implemented that is learnt, for instance, by scanning each floor of a building. Each floor may comprise specific features, such as corners, or walls in equal positions, which once learnt, can be used for the computing of the use case specific scanning route SSR in the following floors. The method according to the present invention may be computed more efficient and less time-consuming.

Fig. 4 is a schematic drawing showing a digital environmental representation 40 of a scanning environment 30 generated by a mobile scanning system 10 according to an embodiment of the present invention. The digital environmental representation 40 is a floor plan of a scanning environment 30, e.g., a building, that has been ad-hoc generated via a SLAM procedure by the mobile scanning system 10. The digital environmental representation 40 illustrated in Fig. 4 is already generated completely. In an embodiment of the present invention the mobile scanning device 20 of the mobile scanning system 10 knows only its position that can be automatically determined from an existing ground plan or by using existing reference information sources of the scanning environment 30, such as, WIFI, Bluetooth, Marker, and/or QR-Codes. In a further embodiment, an already existing digital environmental representation 40 may be used and can overlay the computed use case specific scan route SSR. The digital environmental representation 40 contains scanning environment information data 31, 33, 33 (see Fig. 1) representing physical objects, rooms with open and/or closed doors.

The mobile scanning system 10 computes a use case specific scan route SSR based of the created digital environmental representation 40 of the scanning environment 30. The capture system 22 of the mobile scanning device 20 captures, for instance the end of a corridor and the possibility to further move left or right. According to a defined use case, the mobile scanning device 20 may move left. Afterwards, according to said defined use case, the mobile scanning device 20 may move right. The method for computing a use case specific scan route SSR is executed iteratively. The use cases may comprise level of detail, quality, and/or time (scan time) requirements.

In summary, the invention relates to a method and mobile scanning system for computing a use case specific scan route. The method comprises the steps:
determining a current position of the mobile scanning device in the scanning environment;
capturing scanning environment information by a capturing system of the mobile scanning device in a surrounding area of the mobile scanning device within the scanning environment starting from the determined position of the mobile scanning device in the scanning environment;
generating automatically a digital environmental representation of the scanning environment comprising the determined position of the mobile scanning device and the captured scanning environment information, wherein the digital environmental representation is updated with further captured scanning environment information while the mobile scanning device is moving or is moved in the scanning environment;
computing the use case specific scan route SSR of the mobile scanning device on the basis of the created digital environmental representation of the scanning environment;
   - using the scanning environment information for creating a digital twin of a building;
wherein the computed use case specific scan route is used by a building automation system to activate/deactivate systems in the scanning environment to make areas more optimally available for the scanning process by a building automation system.

In this way, a dynamic ad-hoc planning of a scan route for a mobile scanning device may be achieved.

### Reference Signs

- 1: method
- 10: mobile scanning system
- 20: mobile scanning device
- 21: computer unit
- 22: capturing system
- 23: display unit
- 30: scanning environment
- 31, 32, 33: scanning environment information
- 34: surrounding area
- 40: digital environmental representation
- SSR: specific scan route
- S1-S4: method step

## Claims

1. A method (1) for computing and using a use case specific scan route (SSR) of a mobile scanning device (20) in a scanning environment (30), comprising the method steps of:
- determining (S1) a position of the mobile scanning device (20) in the scanning environment (30);
- capturing (S2) scanning environment information (31) by a capturing system (22) of the mobile scanning device (20) in a surrounding area (34) of the mobile scanning device (20) within the scanning environment (30) starting from the determined position of the mobile scanning device (20) in the scanning environment (30);
- generating (S3) a digital environmental representation (40) of the scanning environment (30) comprising the determined position of the mobile scanning device (20) and the captured scanning environment information (31, 32, 33), wherein the digital environmental representation (40) is updated with further captured scanning environment information (31, 32, 33) while the mobile scanning device (20) is moving or is moved in the scanning environment (30);
- computing (S4) the use case specific scan route (SSR) of the mobile scanning device (20) on the basis of the created digital environmental representation (40) of the scanning environment (30);
- using the scanning environment information (31) for creating a digital twin of a building;
wherein the computed use case specific scan route (SSR) is used by a building automation system to activate/deactivate systems in the scanning environment (30) to make areas more optimally available for the scanning process.

2. The method according to claim 1, wherein the position is determined automatically on the basis of a stored ground plan of the scanning environment (30).

3. The method according to claim 1 or 2, wherein the position is determined automatically by using at least one reference information source of the scanning environment (30).

4. The method according to claim 3, wherein the reference information source comprises WIFI, Bluetooth, Marker, and/or QR-codes.

5. The method according to any of the preceding claims, wherein the use case comprises parameters including at least one of a level of detail, quality requirements, and/or time requirements.

6. The method according to any of the preceding claims, wherein the capturing system (22) comprises at least a lidar system, a camera system, a radar system, an acoustic system, an infrared system, and/or a temperature measurement system.

7. The method according to any of the preceding claims, wherein generating (S3) the digital environmental representation (40) comprises a prediction of a scan time required for the use case specific scan route (SSR).

8. The method according to claim 7, wherein the predicted scan time is provided to an operator of the mobile scanning device (20) and/or to a connected control system.

9. The method according to any of the preceding claims, wherein generating (S3) the digital environmental representation (40) comprises a deviation calculation.

10. The method according to any of the preceding claims, wherein a use case comprises the specification of the area to be scanned in a certain time.

11. A scanning system (10) comprising means for carrying out the steps of the method of claim 1.

12. A computer program product comprising program elements which induce a computer unit (21) to carry out the steps of the method for computing a use case specific scan route (SSR) according to one of the preceding methods claims 1 to 10, when the program elements are loaded into a memory of the computer unit (21).

## Patentansprüche

1. Verfahren (1) zum Berechnen und Benutzen einer anwendungsfallspezifischen Scanroute (SSR) eines mobilen Scangeräts (20) in einer Scanumgebung (30), das folgende Verfahrensschritte umfasst:
- Bestimmen (S1) einer Position des mobilen Scangeräts (20) in der Scanumgebung (30),
- Erfassen (S2) von Scanumgebungsinformationen (31) über ein Erfassungssystem (22) des mobilen Scangeräts (20) in einem Umgebungsbereich (34) des mobilen Scangeräts (20) in der Scanumgebung (30) ausgehend von der bestimmten Position des mobilen Scangeräts (20) in der Scanumgebung (30),
- Generieren (S3) einer digitalen Umgebungsdarstellung (40) von der Scanumgebung (30), die die bestimmte Position des mobilen Scangeräts (20) und die erfassten Scanumgebungsinformationen (31, 32, 33) umfasst, wobei die digitale Umgebungsdarstellung (40) mit weiteren erfassten Scanumgebungsinformationen (31, 32, 33) aktualisiert wird, während sich das mobile Scangerät (20) in der Scanumgebung (30) bewegt oder bewegt wird,
- Berechnen (S4) der anwendungsfallspezifischen Scanroute (SSR) des mobilen Scangeräts (20) auf der Grundlage der erstellten digitalen Umgebungsdarstellung (40) der Scanumgebung (30),
- Benutzen der Scanumgebungsinformationen (31) zum Erstellen eines digitalen Zwillings von dem Gebäude,
wobei die berechnete anwendungsfallspezifische Scanroute (SSR) von einem Gebäudeautomationssystem zum Aktivieren/Deaktivieren von Systemen in der Scanumgebung (30) benutzt wird, damit Bereiche optimaler für den Scanvorgang nutzbar sind.

2. Verfahren nach Anspruch 1, wobei die Position auf der Grundlage eines gespeicherten Grundrisses der Scanumgebung (30) automatisch bestimmt wird.

3. Verfahren nach Anspruch 1 oder 2, wobei die Position mithilfe mindestens einer Referenzinformationsquelle in der Scanumgebung (30) automatisch bestimmt wird.

4. Verfahren nach Anspruch 3, wobei die Referenzinformationsquelle WIFI, Bluetooth, Marker und/oder QR-Codes umfasst.

5. Verfahren nach einem der vorhergehenden Ansprüche, wobei der Anwendungsfall Parameter wie Detailgenauigkeit, Qualitätsanforderungen und/oder Zeitbedarf umfasst.

6. Verfahren nach einem der vorhergehenden Ansprüche, wobei das Erfassungssystem (22) ein Lidarsystem, ein Kamerasystem, ein Radarsystem, ein akustisches System, ein Infrarotsystem und/oder ein Temperaturmesssystem umfasst.

7. Verfahren nach einem der vorhergehenden Ansprüche, wobei das Generieren (S3) der digitalen Umgebungsdarstellung (40) eine Prognose zu einer Scanzeit umfasst, die für die anwendungsfallspezifische Scanroute (SSR) benötigt wird.

8. Verfahren nach Anspruch 7, wobei die prognostizierte Scanzeit für eine Bedienperson des mobilen Scangeräts (20) und/oder ein angeschlossenes Steuersystem bereitgestellt wird.

9. Verfahren nach einem der vorhergehenden Ansprüche, wobei das Generieren (S3) der digitalen Umgebungsdarstellung (40) eine Abweichungsberechnung umfasst.

10. Verfahren nach einem der vorhergehenden Ansprüche, wobei ein Anwendungsfall die Vorgabe umfasst, welcher Bereich in einer bestimmten Zeit gescannt werden soll.

11. Scansystem (10) mit Mitteln zum Durchführen der Schritte des Verfahrens aus Anspruch 1.

12. Computerprogrammprodukt mit Programmelementen, die eine Computereinheit (21) dazu veranlassen, die Schritte des Verfahrens zum Berechnen einer anwendungsfallspezifischen Scanroute (SSR) gemäß einem der vorhergehenden Verfahrensansprüche 1 bis 10 durchzuführen, wenn die Programmelemente in einen Speicher der Computereinheit (21) geladen sind.

## Revendications

1. Procédé (1) de calcul et d'utilisation d'un itinéraire de balayage spécifique (SSR) à un cas d'utilisation d'un dispositif de balayage mobile (20) dans un environnement de balayage (30), comprenant les étapes de procédé de :
- détermination (S1) d'une position du dispositif de balayage mobile (20) dans l'environnement de balayage (30) ;
- capture (S2) d'informations d'environnement de balayage (31) par un système de capture (22) du dispositif de balayage mobile (20), dans une zone environnante (34) du dispositif de balayage mobile (20) au sein de l'environnement de balayage (30), à partir de la position déterminée du dispositif de balayage mobile (20) dans l'environnement de balayage (30) ;
- génération (S3) d'une représentation numérique d'environnement (40) de l'environnement de balayage (30), comprenant la position déterminée du dispositif de balayage mobile (20) et les informations d'environnement de balayage capturées (31, 32, 33), dans lequel la représentation numérique d'environnement (40) est mise à jour avec des informations d'environnement de balayage capturées supplémentaires (31, 32, 33) pendant que le dispositif de balayage mobile (20) se déplace ou est déplacé dans l'environnement de balayage (30) ;
- calcul (S4) de l'itinéraire de balayage spécifique (SSR) à un cas d'utilisation du dispositif de balayage mobile (20) sur la base de la représentation numérique d'environnement créée (40) de l'environnement de balayage (30) ;
- utilisation des informations d'environnement de balayage (31) pour créer un jumeau numérique d'un bâtiment ;
dans lequel l'itinéraire de balayage spécifique (SSR) à un cas d'utilisation calculé est utilisé par un système d'automatisation de bâtiment pour activer/désactiver des systèmes dans l'environnement de balayage (30) afin de rendre des zones plus optimalement disponibles pour le processus de balayage.

2. Procédé selon la revendication 1, dans lequel la position est déterminée automatiquement sur la base d'un plan du sol stocké de l'environnement de balayage (30).

3. Procédé selon la revendication 1 ou 2, dans lequel la position est déterminée automatiquement en utilisant au moins une source d'informations de référence de l'environnement de balayage (30).

4. Procédé selon la revendication 3, dans lequel la source d'informations de référence comprend le Wi-Fi, le Bluetooth, un marqueur et/ou des codes QR.

5. Procédé selon l'une des revendications précédentes, dans lequel le cas d'utilisation comprend des paramètres incluant au moins l'un parmi un niveau de détail, des exigences de qualité et/ou des exigences temporelles.

6. Procédé selon l'une des revendications précédentes, dans lequel le système de capture (22) comprend au moins un système lidar, un système de caméra, un système radar, un système acoustique, un système infrarouge et/ou un système de mesure de température.

7. Procédé selon l'une des revendications précédentes, dans lequel la génération (S3) de la représentation numérique d'environnement (40) comprend une prédiction du temps de balayage nécessaire pour l'itinéraire de balayage spécifique (SSR) à un cas d'utilisation.

8. Procédé selon la revendication 7, dans lequel le temps de balayage prédit est fourni à un opérateur du dispositif de balayage mobile (20) et/ou à un système de commande connecté.

9. Procédé selon l'une des revendications précédentes, dans lequel la génération (S3) de la représentation numérique d'environnement (40) comprend un calcul d'écart.

10. Procédé selon l'une des revendications précédentes, dans lequel un cas d'utilisation comprend la spécification de la zone à balayer dans un certain temps.

11. Système de balayage (10) comprenant des moyens pour réaliser les étapes du procédé de la revendication 1.

12. Produit de programme informatique comprenant des éléments de programme qui amènent une unité informatique (21) à réaliser les étapes du procédé de calcul d'un itinéraire de balayage spécifique (SSR) à un cas d'utilisation selon l'une des revendications de procédés 1 à 10 précédentes, lorsque les éléments de programme sont chargés dans une mémoire de l'unité informatique (21).
